(19) Europäisches Patentamt
European Patent Office
Office européen des brevets

(11) EP 1 700 874 B1

(12) **EUROPEAN PATENT SPECIFICATION**

(45) Date of publication and mention of the grant of the patent:
**25.05.2011 Bulletin 2011/21**

(21) Application number: **04807332.4**

(22) Date of filing: **14.12.2004**

(51) Int Cl.:
***C08G 59/50*** *(2006.01)* ***C08G 59/18*** *(2006.01)*

(86) International application number:
**PCT/JP2004/018975**

(87) International publication number:
**WO 2005/059001 (30.06.2005 Gazette 2005/26)**

# (54) CURABLE COMPOSITION

HÄRTBARE ZUSAMMENSETZUNG

COMPOSITION DURCISSABLE

(84) Designated Contracting States:
**AT BE BG CH CY CZ DE DK EE ES FI FR GB GR HU IE IS IT LI LT LU MC NL PL PT RO SE SI SK TR**

(30) Priority: **16.12.2003 JP 2003418789**

(43) Date of publication of application:
**13.09.2006 Bulletin 2006/37**

(73) Proprietor: **Toyo Boseki Kabushiki Kaisha
Osaka-shi,
Osaka 530-8230 (JP)**

(72) Inventors:
- **YOSHIDA, Takefumi,
c/o Toyo Boseki Kabushiki Kaisha
Ohtsu-shi, Shiga 5200292 (JP)**
- **TSUTSUMI, Masayuki,
c/o Toyo Boseki Kabushiki Kaisha
Ohtsu-shi, Shiga 5200292 (JP)**
- **MAEDA, Satoshi,
c/o Toyo Boseki Kabushiki Kaisha
Ohtsu-shi, Shiga 5200292 (JP)**
- **KAWAHARA, Keizo,
c/o Toyo Boseki Kabushiki Kaisha
Ohtsu-shi, Shiga 5200292 (JP)**

(74) Representative: **Müller-Boré & Partner
Patentanwälte
Grafinger Straße 2
81671 München (DE)**

(56) References cited:
**WO-A1-98/29467 JP-A- 2000 327 882
JP-A- 2003 213 086 JP-A- 2003 246 844
JP-A- 2004 123 703 JP-A- 2004 143 424
US-A- 5 461 090**

- **DATABASE WPI Week 198214, Derwent Publications Ltd., London, GB; Class A21, AN 1982-27072E & JP 57 034118 A (DAINIPPON JUSHI KEN) 24 February 1982**
- **DATABASE WPI Week 198221, Derwent Publications Ltd., London, GB; Class A21, AN 1982-43508E & SU 852 914 B (LENINGRAD LENSOVET TECH) 07 August 1981**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 1 700 874 B1

## Description

The present invention relates to curable compositions used for adhesives, daubs, coating materials, ink, paint, resins for molding and the like. More particularly, the present invention relates to one-component epoxy curable compositions that can be preserved at normal temperatures.

Conventionally, many kinds of resins including epoxy resins, urethane resins, polysulfide resins and the like have been used for adhesives, architectural materials, sports goods and the like. However, most of such products are of a two-component type, wherein a resin, a curing agent and a curing accelerator are mixed immediately before use. While they are superior in preservation stability, they are associated with many defects in that an erroneous mixing ratio during use results in failure to cure, handling property is poor due to preparation when in use, which in turn increases the production cost, and the like. Thus, there is an increasing demand for a one-component product to omit the step for mixing a resin, a curing agent and a curing accelerator during use. To give a one-component product, for example, epoxy resins are used with dicyandiamide, hydrazide compounds, boron trifluoride compounds, alkylurea compounds and the like, which are referred to as latent curing agents, and often used together with a curing accelerator such as imidazole compounds, phosphine compounds and the like. However, such one-component curable composition is associated with a problem of viscosity increase as to the long-term preservation stability, as well as a practical problem of necessary high temperature heating during curing when improving the preservation property, and the like.

On the other hand, provision of a one-component product by the application of a microencapsulation technique has also been studied. For example, attempts have been made to prepare a microencapsulated product of an amine curing agent by applying an interfacial polymerization method, and apply the product as a curing agent for one-component urethane resins, epoxy resins and the like (see JP-B-54-31468).

Besides these, as methods for microencapsulation of a curing agent, there have been proposed a method comprising use of a microencapsulated curing accelerator obtained by coagulating colloidal fine particles with an electrolyte to give a capsule film and covering the curing accelerator with the film (see JP-A-6-25470), a method comprising use of a latent curing agent containing at least a curing agent and one or more kinds of cyclodextrin compounds (see JP-A-9-31162) and the like.

These encapsulated curing agents are associated with problems of poor capsule stability near normal temperatures, which in turn causes viscosity increase when prepared as a one-component resin, poor reactivity upon capsule breakage, thus necessitating a long time or high temperature for curing, and the like, and practicalization thereof has been delayed.

To solve such problems, a method utilizing the solid/liquid phase change of epoxy compounds has been proposed (see JP-A-8-269167). For example, a semiconductor sealing epoxy resin composition containing a crystalline epoxy resin having a melting point of 50-150˚C, a phenol resin curing agent, a curing accelerator and an inorganic filler as essential components, wherein the inorganic filler is contained in a proportion of 75-93 wt% of the whole composition, has been proposed.

It is a design where the components are mixed at a temperature lower than the crystal melting point of the epoxy resin, and in the event of curing, the composition is heated to a temperature not lower than the crystal melting point to allow the melted epoxy resin to react with the curing agent. According to this method, however, a severe reaction begins upon melting of the epoxy resin and, particularly, a topical heat is generated due to a sharp reaction near the crystal particle interface, which in turn causes mottles during the curing reaction, and a uniformly-cured product cannot be obtained.

JP-A-57034118 describes a one-component type epoxy resin composition containing diglycidyl ether bisphenol A type epoxy resin, dicyandiamide and a curing accelerator.

WO-A-98/29467 describes a waterborne curing agent composition, comprising a prereacted surfactant composition for self-curing epoxy resins at ambient or sub-ambient temperatures.

SU-B-852914 describes epoxide resin based compositions containing 5-amino-2-p-aminophenyl-benzoxazole as hardener.

US-A-5,461,090 describes aqueous primer compositions containing substantially no volatile organic solvents.

It is therefore an object of the present invention to provide a one-component epoxy curable composition superior in the preservation stability and having superior properties as a cured product.

The present inventors have conducted intensive studies in an attempt to solve the aforementioned problems and completed the present invention. Accordingly, the present invention provides the following.

(1) A curable composition that forms a continuous phase and a dispersoid at normal temperatures i.e. -20 to 50˚C, wherein the continuous phase is a liquid at normal temperatures and comprises (a) a compound having two or more epoxy groups in a molecule, and
the dispersoid comprises (b) a compound present as solid particles in a continuous phase at normal temperatures and having two or more amino groups in a molecule,

wherein the aforementioned compound having two or more amino groups in a molecule is an aromatic amine compound having a benzoxazole structure.

(2) The curable composition of the above-mentioned (1), wherein the aforementioned compound having two or more epoxy groups in a molecule is a liquid at normal temperatures.

(3) The curable composition of the above-mentioned (1) or (2), wherein the aforementioned continuous phase contains an organic solvent having a boiling point of not higher than 200˚C.

(4) The curable composition of any of the above-mentioned (1)-(3), wherein the aforementioned solid particles have a volume average particle size of 0.05 - 50 μm.

The present invention provides a curable composition comprising an epoxy compound in a continuous phase and a multifunctional amine compound, which is a curing agent, as a solid fine particle dispersoid. The curing agent is separately present as a dispersoid from the epoxy compound in a continuous phase, and therefore, they are incompatible at least at normal temperatures, thus prohibiting a curing reaction. As a result, even though it is a one-component composition, the superior preservation stability can be maintained. However, when heated, the curing agent begins to dissolve in the continuous phase to cause reactions, which results in the production of a cured product.

When the change of,solid/liquid phases of a compound is utilized, which has been conventionally proposed as to the use of a crystalline epoxy resin, an epoxy compound activated due to high temperature reaching the melting point is suddenly brought into contact with a curing agent. Thus, a severe reaction occurs and mottles are generated in the cured product. As shown in the present invention, when the both are brought into contact with each other through dissolution, the reaction occurs comparatively gently, the epoxy compound and the curing agent are mixed comparatively uniformly, the structure of the cured product becomes uniform and, as a result, superior properties of the cured product can be achieved.

The curable composition of the present invention forms, at normal temperatures, a continuous phase, which is a liquid at normal temperatures, comprising (a) a compound having two or more epoxy groups in a molecule (hereinafter sometimes to be abbreviated as epoxy compound (a)) and, as a curing agent, a dispersoid comprising (b) a compound present as solid particles in a continuous phase at normal temperatures and having two or more amino groups in a molecule (hereinafter sometimes to be abbreviated as amine compound (b)). Due to such constitution, a curing reaction does not occur, since epoxy compound (a) and amine compound (b) are incompatible at least at normal temperature, and superior preservation stability can be maintained. In the present invention, the normal temperature means the surrounding temperature in the environment, and generally means a temperature within the range of about -20˚C to 50˚C.

As epoxy compound (a) in the present invention, a compound having two or more epoxy groups in one molecule can be used. As such compound, glycidyl ether epoxy compounds, such as glycidyl ether of bisphenol A, glycidyl ether of bisphenol F, glycidyl ether of bisphenol S, glycidyl ether of resorcin, glycidyl ether of glycerol, glycidyl ether of polyalkylene oxide, glycidyl ether of brominated bisphenol A and oligomers thereof, and the like can be mentioned. Furthermore, an epoxy compound which is a condensate of phenols, naphthols and the like with formalins, aliphatic or aromatic aldehydes, or ketones, as represented by glycidyl ether of phenol novolac, glycidyl ether of cresol novolac and the like, an alicyclic epoxy compound, such as alicyclic diepoxyacetal, alicyclic diepoxy adipate, alicyclic diepoxy carboxylate and the like can be mentioned.

In addition, glycidyl ester epoxy compounds (i.e. phthalic acid diglycidyl ester, tetrahydrophthalic acid diglycidyl ester, hexahydrophthalic acid diglycidyl ester and the like), glycidyl amine epoxy compounds (i.e. N,N-diglycidylaniline, tetraglycidylaminodiphenylmethane), heterocyclic epoxy compound, hydantoin epoxy compound, triglycidyl isocyanurate and the like can be mentioned. These epoxy compounds (a) can be used alone, or in a combination of two or more kinds thereof.

In the present invention, use of epoxy compound (a) having two or more epoxy groups in a molecule is essential. In addition to such compound, a monofunctional epoxy compound may be used in combination as necessary.

The continuous phase is a liquid at normal temperatures. The epoxy compound (a) preferably used to afford a liquid continuous phase is an epoxy compound having a comparatively low molecular weight, which is a liquid at normal temperatures, such as glycidyl ether of bisphenol A, glycidyl ether of phenol novolac and the like. An epoxy compound (a) having a molecular weight of not more than 1000, preferably not more than 800, more preferably not more than 600, and still more preferably not more than 400, can be preferably used. The epoxy compound (a) does not need to be a liquid in itself and, for example, an epoxy compound having a comparatively high molecular weight, which is a solid in itself, may be dissolved.in a low molecular weight liquid epoxy compound.

In the present invention, a liquid continuous phase may be afforded by adding a conventional low-boiling solvent to a continuous phase. The combined use of a solvent is effective when epoxy compound (a) is a solid or has an extremely high viscosity. Moreover, the use of a solvent is preferable when a coated film having a small thickness is desired in the application to daub or adhesive. As the organic solvent to be used, a solvent having a boiling point of not more than 200˚C is preferable, a solvent having a boiling point of not more than 180˚C is more preferable and a solvent having a boiling point of not more than 160˚C is still more preferable. The ultimate object of the present invention is provision of

a cured product. Therefore, the use of a high-boiling solvent is not preferable, since it degrades the properties of the cured product. Moreover, when the boiling point of the solvent is too low, practicality is impaired. Thus, a solvent having a boiling point of not less than 50°C is preferable, a solvent having a boiling point of not less than 70°C is more preferable, and a solvent having a boiling point of not less than 90°C is still more preferable.

More concrete solvents are selected from, for example, methanol, ethanol, propanol, butanol, toluene, xylene, Solvesso, Isopar, ethyl acetate, butyl acetate, methyl ethyl ketone, cyclohexanone, cyclohexanol, isophorone, methyl cellosolve, ethyl cellosolve, butyl cellosolve, butyl cellosolve acetate, ethyl Carbitol, ethyl Carbitol acetate, ethyleneglycolmonoacetate, dimethylformamide, γ-butyrolactone, n-methyl pyrrolidone and the like, in consideration of solubility, evaporation rate and the like. While the amount of the solvent to be added varies depending on the epoxy compound (a) to be used, it is generally 10-1000 parts by weight, preferably 30-300 parts by weight, per 100 parts by weight of epoxy compound (a). When the amount of the solvent is too high, the viscosity of a curable composition decreases to unpreferably make uniform coating difficult.

In the present invention, use of amine compound (b) as a curing agent is essential, which has two or more amino groups in a molecule and is dispersed as solid particles in a continuous phase containing epoxy compound (a) at normal temperatures.

The melting point of amine compound (b) is preferably 60-400°C, more preferably 100-350°C. When the melting point is too low, the compound is likely to elute out to impair preservation stability, and when it is too high, curing is likely to require high temperature and long time, thus degrading the operability.

As amine compound (b) satisfying such conditions, for example, a multifunctional amine compound having the aromatic heterocyclic skeleton can be preferably mentioned. Moreover, a multifunctional amine compound having the aromatic heteronuclear skeleton can be preferably mentioned.

In the present invention, an aromatic amine compound having a benzoxazole structure is used as amine compound (b). As the aromatic amine compound having a benzoxazole structure, compounds represented by the following chemical formulas (I)-(XIII) can be mentioned.

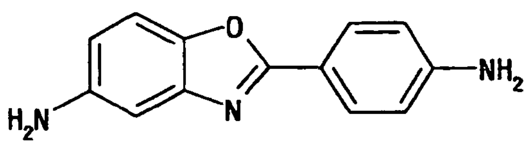

(I)

5-amino-2-(p-aminophenyl)benzoxazole

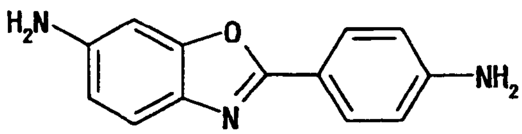

(II)

6-amino-2-(p-aminophenyl)benzoxazole

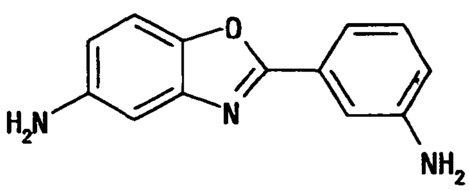

(III)

5-amino-2-(m-aminophenyl)benzoxazole

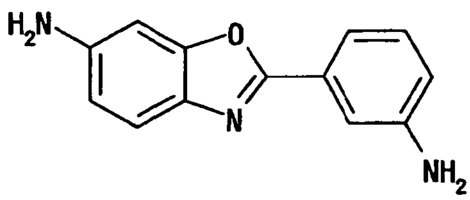

(IV)

6-amino-2-(m-aminophenyl)benzoxazole

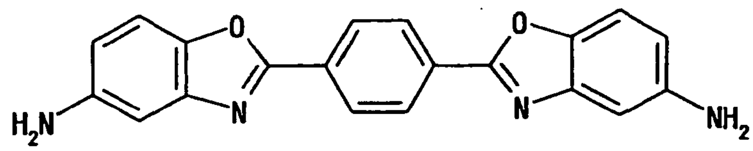

(V)

2,2'-p-phenylenebis(5-aminobenzoxazole)

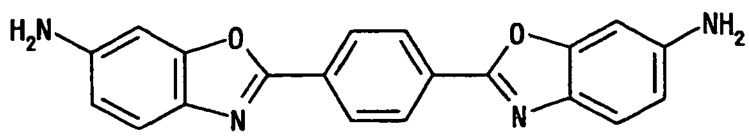

(VI)

2,2'-p-phenylenebis(6-aminobenzoxazole)

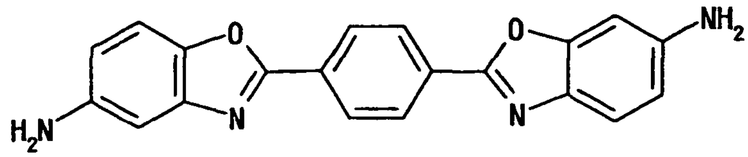

(VII)

1-(5-aminobenzoxazolo)-4-(6-aminobenzoxazolo)benzene

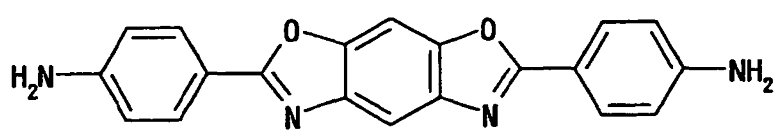

(VIII)

2,6-(4,4'-diaminodiphenyl)benzo[1,2-d:5,4-d']bisoxazole

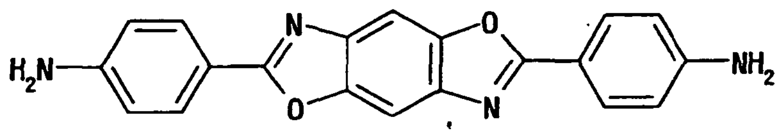

(IX)

2,6-(4,4'-diaminodiphenyl)benzo[1,2-d:4,5-d']bisoxazole

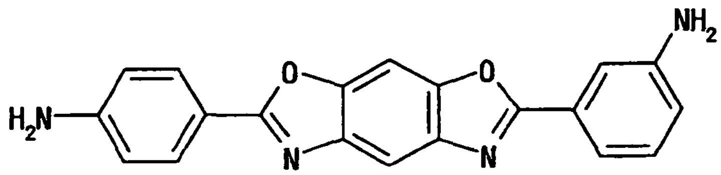

(X)

2,6-(3,4'-diaminodiphenyl)benzo[1,2-d:5,4-d']bisoxazole

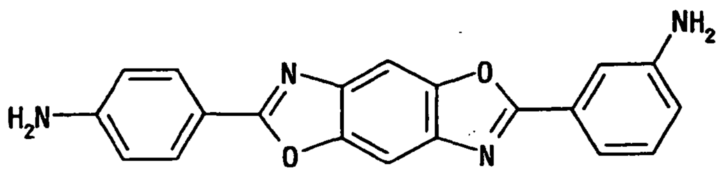

(XI)

2,6-(3,4'-diaminodiphenyl)benzo[1,2-d:4,5-d']bisoxazole

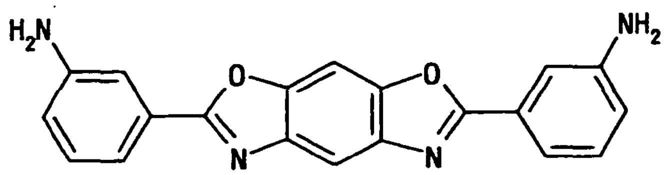

(XII)

2,6-(3,3'-diaminodiphenyl)benzo[1,2-d:5,4-d']bisoxazole

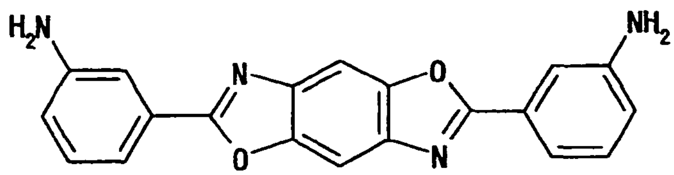

(XIII)

2,6-(3,3'-diaminodiphenyl)benzo[1,2-d:4,5-d']bisoxazole

The amine compounds (b) may be used alone or in a mixture of two or more kinds thereof.

In the present invention, an amine compound incapable of existing in the form of solid particles in a continuous phase due to dissolution in a continuous phase at normal temperatures, for example, one or more kinds of diamines free of a benzoxazole structure, which are exemplified in the following, may be used in combination as long as the preservation stability is not impaired, which is generally not more than 30 mol%, preferably not more than 15 mol%, of the total diamine. As such diamines, for example, 4,4'-bis(3-aminophenoxy)biphenyl, bis[4-(3-aminophenoxy)phenyl] ketone, bis[4-(3-aminophenoxy)phenyl]sulfide, bis [4- (3-aminophenoxy)phenyl]sulfone, 2,2-bis[4-(3-aminophenoxy) phenyl]propane, 2,2-bis[4-(3-aminophenoxy)phenyl]-1,1,1,3,3,3-hexafluoropropane, m-phenylenediamine, o-phenylenediamine, p-phenylenediamine, m-aminobenzylamine, p-aminobenzylamine, 3,3'-diaminodiphenylether, 3,4'-diaminodiphenylether, 4,4'-diaminodiphenylether, 3,3'-diaminodiphenylsulfide, 3,3'-diaminodiphenylsulfoxide, 3,4'-diaminodiphenylsulfoxide, 4,4'-diaminodiphenylsulfoxide, 3,3'-diaminodiphenylsulfone, 3,4'-diaminodiphenylsulfone, 4,4'-diaminodiphenylsulfone, 3,3'-diaminobenzophenone, 3,4'-diaminobenzophenone, 4,4'-diaminobenzophenone, 3,3'-diaminodiphenylmethane, 3,4'-diaminodiphenylmethane, 4,4'-diaminodiphenylmethane, bis[4-(4-aminophenoxy)phenyl] methane, 1,1-bis[4-(4-aminophenoxy)phenyl]ethane, 1,2-bis[4-(4-aminophenoxy)phenyl]ethane, 1,1-bis[4-(4-aminophenoxy)phenyl]propane, 1,2-bis[4-(4-aminophenoxy)phenyl]propane, 1,3-bis[4-(4-aminophenoxy)phenyl]propane, 2,2-bis[4-(4-aminophenoxy)phenyl]propane, 1,1-bis[4-(4-aminophenoxy)phenyl]butane, 1,3-bis[4-(4-aminophenoxy) phenyl]butane, 1,4-bis[4-(4-aminophenoxy)phenyl]butane, 2,2-bis[4-(4-aminophenoxy)phenyl]butane, 2,3-bis[4-(4-aminophenoxy)phenyl]butane, 2-[4-(4-aminophenoxy)phenyl]-2-[4-(4-aminophenoxy)-3-methylphenyl]propane, 2,2-bis [4-(4-aminophenoxy)-3-methylphenyl]propane, 2-[4-(4-aminophenoxy)phenyl]-2-[4-(4-aminophenoxy)-3,5-dimethylphenyl]propane, 2,2-bis[4-(4-aminophenoxy)-3,5-dimethylphenyl]propane, 2,2-bis[4-(4-aminophenoxy)phenyl]-1,1,1,3,3,3-hexafluoropropane, 1,4-bis(3-aminophenoxy)benzene, 1,3-bis(3-aminophenoxy)benzene, 1,4-bis(4-aminophenoxy)benzene, 4,4'-bis(4-aminophenoxy)biphenyl, bis[4-(4-aminophenoxy)phenyl]ketone, bis[4-(4-aminophenoxy)phenyl]sulfide, bis[4-(4-aminophenoxy)phenyl]sulfoxide, bis[4-(4-aminophenoxy)phenyl]sulfone, bis[4-(3-aminophenoxy)phenyl]ether, bis[4-(4-aminophenoxy)phenyl]ether, 1,3-bis[4-(4-aminophenoxy)benzoyl]benzene, 1,3-bis[4-(3-aminophenoxy)benzoyl]benzene, 1,4-bis[4-(3-aminophenoxy)benzoyl]benzene, 4,4'-bis(3-aminophenoxy)benzoyl]benzene, 1,1-bis[4-(3-aminophenoxy)phenyl]propane, 1,3-bis[4-(3-aminophenoxy)phenyl]propane, 3,4'-diaminodiphenylsulfide, 2,2-bis[3-(3-aminophenoxy)phenyl]-1,1,1,3,3,3-hexafluoropropane, bis[4-(3-aminophenoxy)phenyl]methane, 1,1-bis[4-(3-aminophenoxy)phenyl]ethane, 1,2-bis[4-(3-aminophenoxy)phenyl]ethane, bis[4-(3-aminophenoxy)phenyl]sulfoxide, 4,4'-bis[3-(4-aminophenoxy)benzoyl]diphenyl ether, 4,4'-bis[3-(3-aminophenoxy)benzoyl]diphenyl ether, 4,4'-bis[4-(4-amino-α,α-dimethylbenzyl)phenoxy]benzophenone, 4,4'-bis[4-(4-amino-α,α-dimethylbenzyl)phenoxy]diphenylsulfone, bis[4-{4-(4-aminophenoxy)phenoxy)phenyl]sulfone, 1,4-bis[4-(4-aminophenoxy)phenoxy-α,α-dimethylbenzyl]benzene, 1,3-bis[4-(4-aminophenoxy)phenoxy-α,α-dimethylbenzyl]benzene, 1,3-bis[4-(4-amino-6-trifluoromethylphenoxy)-α,α-dimethylbenzyl]benzene, 1,3-bis[4-(4-amino-6-fluorophenoxy)-α,α-dimethylbenzyl]benzene, 1,3-bis[4-(4-amino-6-methylphenoxy)-α,α-dimethylbenzyl]benzene, 1,3-bis[4-(4-amino-6-cyanophenoxy)-α,α,-dimethylbenzyl]benzene, 3,3'-diamino-4,4'-diphenoxybenzophenone, 4,4'-diamino-5,5'-diphenoxybenzophenone, 3,4'-diamino-4,5'-diphenoxybenzophenone, 3,3'-diamino-4-phenoxybenzophenone, 4,4'-diamino-5-phenoxybenzophenone, 3,4'-diamino-4-phenoxybenzophenone, 3,4'-diamino-5'-phenoxybenzophenone, 3,3'-diamino-4,4'-dibiphenoxybenzophenone, 4,4'-diamino-5,5'-dibiphenoxybenzophenone, 3,4'-diamino-4,5'-dibiphenoxybenzophenone, 3,3'-diamino-4-biphenoxybenzophenone, 4,4'-diamino-5-biphenoxybenzophenone, 3,4'-diamino-4-biphenoxybenzophenone, 3,4'-diamino-5'-biphenoxybenzophenone, 1,3-bis(3-amino-4-phenoxybenzoyl)benzene, 1,4-bis(3-amino-4-phenoxybenzoyl)benzene, 1,3-bis(4-amino-5-phenoxybenzoyl)benzene, 1,4-bis(4-amino-5-phenoxybenzoyl)benzene, 1,3-bis(3-amino-4-biphenoxybenzoyl)benzene, 1,4-bis(3-amino-4-biphenoxybenzoyl)benzene, 1,3-bis(4-amino-5-biphenoxybenzoyl)benzene, 1,4-bis(4-amino-5-biphenoxybenzoyl) benzene, 2,6-bis[4-(4-amino-α,α-dimethylbenzyl)phenoxy]benzonitrile and the above-mentioned aromatic diamines wherein the hydrogen atoms on the aromatic ring are partially or entirely substituted by a halogen atom, an alkyl group or alkoxy group having 1 to 3 carbon atoms, a cyano group, or a halogenated alkyl group or alkoxy group having 1 to 3 carbon atoms, wherein the hydrogen atoms of the alkyl group or alkoxy group are partially or entirely substituted by a halogen atom, and the like can be mentioned.

In the present invention, amine compound (b), preferably an aromatic diamine compound having a benzoxazole structure is dispersed in the composition in a solid fine particle state. In this case, its volume average particle size is preferably 0.05-50 μm, more preferably 0.1-15 μm, and still more preferably 0.3-7 μm. When the volume average particle size exceeds a given range, the composition is likely to become non-uniform due to the precipitation or floatation of the dispersed particles to result in a mottled cured film. When it is smaller than the given range, the viscosity of the whole system is likely to increase markedly, thus making the handling difficult.

In the present invention, the volume average particle size means a volume average particle size calculated from the particle size distribution measured by the laser scattering method.

To be specific, the curable composition of the present invention is diluted 100-fold (v/v) with toluene, the particle size distribution is measured using a laser scattering particle size distribution analyzer (e.g., LB-500 manufactured by Horiba, Ltd., and the like), and the volume average particle size is calculated with the refractive index (1.496) of toluene used as a refractive index ($n_m$) of the medium and 1.55 as the refractive index ($n_p$) of dispersoid.

The particle size distribution of amine compound (b) is preferably sharp. To be specific, the standard deviation/average value (CV value) measured according to the laser scattering method is preferably not more than 1.0, more preferably not more than 0.7, and still more preferably not more than 0.5.

In the present invention, amine compound (b) can be used by dividing ultrafinely in a dry mill such as a chopper mill, a jet mill, an angmill, an atomizer and the like. Alternatively, it can be dispersed ultrafinely during dispersing using a wet-dispersing device such as an attritor, a homogenizer, a nanomizer, and the like. It is also possible to concurrently use a known dispersant to the extent the properties of the cured product is not impaired.

The mixing ratio of the epoxy compound (a) and amine compound (b) in the present invention, A/B, wherein the total molar amount of epoxy group in the epoxy compound (a) is A (mol) and the total molar amount of amino group in the amine compound (b) is B (mol), is preferably 0.70-1.50, more preferably 0.80-1.35, still more preferably 0.90-1.2, and further preferably 0.95-1.08. When the mixing ratio exceeds a given range, the properties of the cured product are markedly degraded. When the mixing ratio is less than a given range, the properties of the cured product are degraded, the water absorbability of the cured product increases, and the permanence and electric insulation are degraded.

In the present invention, an appropriate amount of a conventionally used curing agent may be concurrently used as the curing agent. As such curing agent, amine curing agents, acid anhydride curing agents, phenol curing agents and the like can be mentioned. To be specific, aliphatic diamines, aliphatic polyamines, aliphatic polyamines including aromatic ring, alicyclic and cyclic polyamines, aromatic primary amines etc., aliphatic acid anhydrides, alicyclic acid anhydrides, aromatic acid anhydrides, halogen acid anhydrides, trisphenol, phenol novolac, cresol novolac and the like

can be mentioned. Since the concurrent use of these curing agents may impair the preservation stability, its amount of addition is not more than 10 wt%, preferably not more than 5 wt%, more preferably not more than 2 wt%, relative to the total amount of the curable composition.

In the present invention, a curing accelerator may be used as necessary. As the curing accelerator, 1,8-diazabicyclo-(5,4,0)-undecene-7(DBU), phosphorus curing accelerators (e.g., tributylphosphine, trioctylphosphine, tricyclohexylphosphine, triphenylphosphine(TPP), tribenzylphosphine, tritolylphosphine, p-styrylphosphine, tris(2,6-dimethoxyphenyl)phosphine, tri-4-methylphenylphosphine, tri-2-cyanoethylphosphine and the like, bis(diphenylphosphino) methane, 1,2-bis (diphenylphosphino) ethane, 1,4-bis-(diphenylphosphino)butane, triphenylphosphine-triphenylborane, tetraphenylphosphonium tetraphenylborate and the like), imidazole curing accelerators (e.g., 2-methylimidazole, 2-ethyl-4-methylimidazole, 2-phenyl-4-methylimidazole, 1-benzyl-2-methylimidazole, 2-ethylimidazole, 2-isopropylimidazole, 2-undecylimidazole, 1-cyanoethyl-2-methylimidazole, 1-cyanoethyl-2-ethyl-4-methylimidazole, 1-cyanoethyl-2-undecylimidazole, 1-cyanoethyl-2-isopropylimidazole, 1-cyanoethyl-2-phenylimidazole), and the like can be mentioned. The curing accelerator is not limited to these and various curing accelerators can be used. These curing accelerators can be used alone or in a mixture thereof as necessary. The amount of the curing accelerator to be added can be appropriately selected from the range of 0.1-10 wt% relative to the total amount of the curable composition, so that an appropriate curing performance can be obtained in consideration of the epoxy compound (a) and amine compound (b) to be used.

In the present invention, moreover, dye, inorganic filler, flexibilizer, organic filler, solvent, diluent, pigment, flame-retardant, mold lubricant, silane coupling agent, titanium coupling agent and the like can be added as necessary, as long as the action effect of the present invention is not impaired.

The curable composition of the present invention can be obtained by adding a dispersoid to a continuous phase containing epoxy compound (a) and finely dispersing the dispersoid. For fine dispersion of the materials, known dispersion means such as a sand mill, an attritor, a shaker, a dissolver, a ball mill, a roll mill and the like can be used.

In the curable composition of the present invention, heating causes dissolution and elution of amine compound (b) in a continuous phase, and progress of the curing reaction. While the heating temperature varies depending on the epoxy compound (a) and amine compound (b) to be used, it is generally within the range of 80-250°C, preferably 100-200°C, and the curing can be carried out in 0.1-6 hr. When the heating temperature is too high, the cured product is likely to become non-uniform or deteriorated. When it is too low, the curing degree of the cured product is likely to be insufficient.

## Examples

The present invention is explained in detail in the following by referring to Examples. In the Examples and Comparative Examples, the physical values were evaluated by the following method.

(1) Volume average particle size

A curable composition was diluted 100-fold with toluene, placed in a quartz cell, and the volume average particle size was measured by a laser scattering particle size distribution analyzer LB-500 manufactured by Horiba, Ltd. It was calculated using the values of toluene as the property values and the refractive index of the medium and 1.55 as the refractive index of the dispersoid.

(2) Preservation stability (viscosity increase)

A curable composition was stood at 50°C for 1000 hr, and the gel fraction was measured and the preservation stability was evaluated. The evaluation criteria were as follows.

○: gel fraction≤5%
Δ: 5%<gel fraction≤10%
×: 10%<gel fraction

The gel fraction was determined by Soxhlet extracting the soluble matters from the cured product for 24 hr with N-methylpyrrolidone as a solvent, and from the following formula.

$$\text{Gel fraction (\%)} = (\text{weight of sample after extraction and drying}) / (\text{weight of sample before extraction}) \times 100$$

(3) Curability

A curable composition was stood at 150˚C for 1 hr, and the gel fraction was measured and the curability was determined. The evaluation criteria were as follows.

○: 90%≤gel fraction
Δ: 80%≤gel fraction<90%
×: gel fraction<80%

The gel fraction was determined by Soxhlet extracting the soluble matters from the cured product for 24 hr with N-methylpyrrolidone as a solvent, and from the following formula.

$$\text{Gel fraction } (\%) = (\text{weight of sample after extraction and drying}) / (\text{weight of sample before extraction}) \times 100$$

(4) Pencil hardness of cured product

Pencil hardness was measured according to JIS-K5400.

(5) Adhesive property of cured product

A curable composition was laminated on a polyimide film KAPTON 100H (polyimide film, manufactured by DU PONT-TORAY CO. LTD.) and the 90-degree peel strength was measured after heat hardening at 150˚C for 2 hr.

(6) Water resistance of cured product

A curable composition was immersed in boiling water at 100˚C, left for standing for 2 hr, taken out and the appearance of the cured product was observed. Water resistance was evaluated by marking those without change in the appearance after the treatment with O, and those with crack or whitening with x.

(Example 1)

Epikote 828 (19.0 parts by weight, epoxy equivalent amount 190 g/eq., bisphenol A epoxy compound manufactured by Japan Epoxy Resins Co. Ltd.) and 5-amino-2-(p-aminophenyl)benzoxazole (11.3 parts by weight, compound of the formula (I), amine equivalent amount 113 g/eq.) were charged in a 100 ml flask, and the mixture was stirred at room temperature for 5 min and dispersed with a three roll mill to give a curable composition, which was subjected to each evaluation test. This curable composition was heated at 150˚C for 2 hr to give a cured product.

(Example 2)

In the same manner as in Example 1 and using Epikote 828 (19.0 parts by weight, epoxy equivalent amount 190 g/eq., bisphenol A epoxy compound manufactured by Japan Epoxy Resins Co. Ltd.) and 2,2'-p-phenylenebis(5-aminobenzoxazole)benzoxazole (17.1 parts by weight, compound of the formula (V), amine equivalent amount 171 parts by weight/eq.), a curable composition was obtained and subjected to the evaluation in the same manner.

(Example 3)

In the same manner as in Example 1 and using Epikote 828 (19.0 parts by weight, epoxy equivalent amount 190 g/eq.) and 2,6-(4,4'-diaminodiphenyl)benzo[1,2-d:4,5-d']bisoxazole (17.1 parts by weight, compound of the formula (IX), amine equivalent amount 171 g/eq.), a curable composition was obtained and subjected to the evaluation in the same manner.

(Example 4)

In the same manner as in Example 1 and using EOCN-102S (21.0 parts by weight, epoxy equivalent amount 210 g/eq., cresol novolac epoxy compound manufactured by NIHON KAYAKU CO. LTD.) and 5-amino-2-(p-aminophenyl)benzoxazole (11.3 parts by weight, compound of the formula (I), amine equivalent amount 113 g/eq.), a curable composition was obtained and subjected to the evaluation in the same manner.

(Example 5)

Epikote 1001 (47.5 parts by weight, 0.050 mol, epoxy equivalent amount 475 g/eq, bisphenol A epoxy compound manufactured by Japan Epoxy Resins Co. Ltd.) was dissolved in methylethylketone (100 parts by weight), 5-amino-2-(p-aminophenyl)benzoxazole (11.3 parts by weight, compound of the formula (I), amine equivalent amount 113 g/eq.) was added, and the mixture was stirred at room temperature for 5 min and dispersed for 3 hrs in a ball mill with an alumina ball (diameter 10 mm) to give a curable composition, which was subjected to each evaluation test. This curable composition was applied to a given substrate, hot-air dried at 80˚C for 30 min and heated at 150˚C for 2 hrs to give a cured product.

(Example 6)

In the same manner as in Example 5 and using Epikote 1004 (92.5 parts by weight, epoxy equivalent amount 925 g/eq., bisphenol A epoxy compound manufactured by Japan Epoxy Resins Co. Ltd.), 5-amino-2-(p-aminophenyl) benzoxazole (11.3 parts by weight, compound of the formula (I), amine equivalent amount 113 g/eq.) and methylethylketone (200 parts by weight), a curable composition was obtained and subjected to the evaluation in the same manner.

(Comparative Example 1)

In the same manner as in Example 1 and using Epikote 828 (19.0 parts by weight, epoxy equivalent amount 190 g/eq.) and o-phenylenediamine (5.4 parts by weight, amine equivalent amount 54 g/eq), a curable composition was obtained and subjected to the evaluation in the same manner. o-Phenylenediamine became compatible with Epikote 828 by stirring at room temperature for 5 min. For confirmation, the volume average particle size was measured. As a result, it was smaller than the measurable level of 0.05 μm, and the absence of substantially solid particles was confirmed. The curable composition showed remarkable viscosity increase from immediately after preparation to the extent that the composition could not be taken out from the container after standing overnight.

(Comparative Example 2)

In the same manner as in Example 1 and using Epikote 828 (19.0 parts by weight, epoxy equivalent amount 190 g/eq.) and m-phenylenediamine (5.4 parts by weight, amine equivalent amount 54 g/eq), a curable composition was obtained and subjected to the evaluation in the same manner. m-Phenylenediamine became compatible with Epikote 828 by stirring at room temperature for 5 min. For confirmation, the volume average particle size was measured. As a result, it was smaller than the measurable level of 0.05 μm, and the absence of substantially solid particles was confirmed. Like Comparative Example 1, the curable composition showed remarkable viscosity increase from immediately after preparation to the extent that the composition could not be taken out from the container after standing overnight.

(Comparative Example 3)

In the same manner as in Example 1 and using Epikote 828 (19.0 parts by weight, epoxy equivalent amount 190 g/eq.) and p-phenylenediamine (5.4 parts by weight, amine equivalent amount 54 g/eq), a curable composition was obtained and subjected to the evaluation in the same manner. p-Phenylenediamine became compatible with Epikote 828 by stirring at room temperature for 5 min. For confirmation, the volume average particle size was measured. As a result, it was smaller than the measurable level of 0.05 μm, and the absence of substantially solid particles was confirmed. Like Comparative Example 1, the curable composition showed remarkable viscosity increase from immediately after preparation to the extent that the composition could not be taken out from the container after standing overnight.

(Comparative Example 4)

In the same manner as in Example 1 and using Epikote 828 (19.0 parts by weight, epoxy equivalent amount 190 g/eq.) and ethylenediamine (3.0 parts by weight, amine equivalent amount 30 g/eq), a curable composition was obtained and subjected to the evaluation in the same manner. Ethylenediamine became compatible with Epikote 828 by stirring at room temperature for 5 min. An exothermic curing reaction occurred from immediately after mixing and the usable time was of the order of several minutes.

(Comparative Example 5)

In the same manner as in Example 1 and using Epikote 828 (19.0 parts by weight, epoxy equivalent amount 190 g/eq.) and diaminodiphenyl ether (16.6 parts by weight, amine equivalent amount 166 g/eq), a curable composition was obtained and subjected to the evaluation in the same manner. Diaminodiphenyl ether became compatible with Epikote 828 by stirring at room temperature for 5 min. For confirmation, the volume average particle size was measured. As a result, it was smaller than the measurable level of 0.05 μm, and the absence of substantially solid particles was confirmed. An exothermic curing reaction occurred from immediately after mixing and the usable time was of the order of several minutes.

(Comparative Example 6): microencapsulated curing accelerator

DBU: 1,8-diaza-bicyclo-(5,4,0)-undecene-7 (80 parts by weight) was dissolved in silica sol (2000 parts by weight, SNOWTEX O, manufactured by NISSAN CHEMICAL INDUSTRIES, LTD., particle size 10-20 nm, concentration 20%), and the solution was dispersed in a solution of sorbitan polyoxyethylene monooleate (8 parts by weight) and sorbitan trioleate (80 parts by weight) in chloroform (6000 parts by weight) with a homogenizer (8000 rpm, 30 sec) to give a W/O dispersion. This was placed in a round flask with a stirrer, and 20 wt% aqueous calcium chloride solution (1000 parts by weight) was added dropwise over about 5 min at room temperature with stirring. The stirring was continued for 15-30 min at room temperature. To a slurry of the obtained capsule particles was added methanol (1000-2000 parts by weight), capsule particles were filtered off by suction filtration and dried to give a microencapsulated curing accelerator (average particle size 4.5 μm) including DBU.

Epikote 828 (100 parts by weight, epoxy equivalent amount 190 g/eq.) and Rikacid MT-500 (91 parts by weight, methyltetrahydrophthalic anhydride, manufactured by New Japan Chemical Co. Ltd.) were mixed, 1 part by weight of the obtained microencapsulated curing accelerator was added and the mixture was uniformly mixed to give a curable composition. The composition was evaluated in the same manner.

(Comparative Example 7): crystalline epoxy resin

In the same manner as in Example 5 and using 4,4'-glycidyl-3,5,3',5'-tetramethyl-biphenyl (165 parts by weight, epoxy equivalent amount 165 g/eq.), ethylenediamine (30 parts by weight, amine equivalent amount 30 g/eq) and methylethylketone (100 parts by weight), a curable composition was obtained and subjected to the evaluation in the same manner.

The evaluation results of Examples are shown in Table 1 and the evaluation results of Comparative Examples are shown in Table 2.

In Examples 1-6, good preservation stability was shown with almost no progress of the reaction even after the lapse of 1000 hr at 50°C. At 150°C, rapid hardening occurred and the properties of the cured product were shown to be sufficiently suitable for use for formation of coated films and adhesion.

In contrast, in Comparative Examples 1-5, a curing reaction proceeded from immediately after mixing, and preservation at room temperature, not to mention at 50°C, was shown to be difficult.

The microencapsulated curing accelerator of Comparative Example 6 was clarified to show poor adaptability to a dispersing machine having high dispersion force such as a three roll mill. The crystalline epoxy of Comparative Example 7 showed insufficient preservation stability.

Table 1

| composition | | Example 1 | Example 2 | Example 3 | Example 4 | Example 5 | Example 6 |
|---|---|---|---|---|---|---|---|
| epoxy compound | | Epikote 828 | Epikote 828 | Epikote 828 | EOCN-102S | Epikote 1001 | Epikote 1004 |
| multifunctional amine compound | | (I) | (v) | (IX) | (I) | (I) | (I) |
| solvent | | none | none | none | none | MEK | MEK |
| volume average particle size | μm | 0.8 | 0.9 | 0.8 | 0.7 | 1.8 | 1.2 |
| preservation stability | | ○ | ○ | ○ | ○ | ○ | ○ |

(continued)

| composition | | Example 1 | Example 2 | Example 3 | Example 4 | Example 5 | Example 6 |
|---|---|---|---|---|---|---|---|
| epoxy compound | | Epikote 828 | Epikote 828 | Epikote 828 | EOCN-102S | Epikote 1001 | Epikote 1004 |
| multifunctional amine compound | | (I) | (v) | (IX) | (I) | (I) | (I) |
| solvent | | none | none | none | none | MEK | MEK |
| curability | | ○ | ○ | ○ | ○ | ○ | ○ |
| pencil hardness | | 4H | 4H | 4H | 5H | 3H | 3H |
| adhesive property | N/cm | 7.1 | 7.4 | 8.2 | 7 | 6.5 | 6.8 |
| water resistance | | ○ | ○ | ○ | ○ | ○ | ○ |

Table 2

| composition | | Comparative Example 1 | Comparative Example 2 | Comparative Example 3 | Comparative Example 4 | Comparative Example 5 | Comparative Example 6 | Comparative Example 7 |
|---|---|---|---|---|---|---|---|---|
| epoxy compound | | Epikote 828 | Epikote 828 | Epikote 828 | Epikote 828 | Epikote 828 | Epikote 828 | crystalline epoxy |
| multifunctional amine compound | | o-phenylene diamine | m-phenylene diamine | p-phenylene diamine | ethylene diamine | diamino-diphenyl ether | acid anhydride, micro-encapsulated curing accelerator | ethylene diamine |
| solvent | | none | none | none | none | none | none | MEK |
| volume average particle size | μm | (dissolved) | (dissolved) | (dissolved) | (dissolved) | (dissolved) | 10 | 8 |
| preservation stability | | × | × | × | × | × | Δ | Δ |
| curability | | ○ | ○ | ○ | ○ | ○ | ○ | ○ |
| pencil hardness | | 4H | 4H | 4H | 2H | 3H | 3H | 3H |
| adhesive property | N/m | 5.2 | 6.1 | 5.5 | 7.1 | 6.7 | 4.6 | 4.8 |
| water resistance | | × | × | × | × | × | ○ | ○ |

As described above, the curable composition of the present invention is one-component, shows high preservation stability at normal temperatures, rapid curing reaction and superior properties of the cured product. It basically affords a simple form consisting of a base resin (epoxy compound) and a curing agent compound that reacts with the base resin at an equimolar ratio. The curable composition of the present invention is useful for adhesives, daubs, coating materials, ink, paints, resins for molding and the like.

## Claims

1. A curable composition that forms a continuous phase and a dispersoid at normal temperatures, i.e. -20 to 50˚C, wherein
   the continuous phase is a liquid at normal temperatures and comprises (a) a compound having two or more epoxy groups in a molecule, and
   the dispersoid comprises (b) a compound present as solid particles in a continuous phase at normal temperatures and having two or more amino groups in a molecule, wherein the compound having two or more amino groups in a molecule is an aromatic amine compound having a benzoxazole structure.

2. The curable composition of claim 1, wherein the compound having two or more epoxy groups in a molecule is a liquid at normal temperatures.

3. The curable composition of claim 1 or 2, wherein the continuous phase contains an organic solvent having a boiling point of not higher than 200˚C.

4. The curable composition of any of claims 1 to 3, wherein the solid particles have a volume average particle size of 0.05 - 50 μm.

## Patentansprüche

1. Härtbare Zusammensetzung, welche bei Normaltemperaturen, d.h. -20 bis 50˚C, eine kontinuierliche Phase und ein Dispersoid bildet, wobei die kontinuierliche Phase bei Normaltemperaturen eine Flüssigkeit ist und (a) eine Verbindung mit zwei oder mehr Epoxygruppen in einem Molekül umfasst, und das Dispersoid (b) eine Verbindung umfasst, welche bei Normaltemperaturen als feste Teilchen in einer kontinuierlichen Phase vorliegt und zwei oder mehr Aminogruppen in einem Molekül aufweist, wobei die Verbindung mit zwei oder mehr Aminogruppen in einem Molekül eine aromatische Aminverbindung mit einer Benzoxazolstruktur ist.

2. Härtbare Zusammensetzung nach Anspruch 1, wobei die Verbindung mit zwei oder mehr Epoxygruppen in einem Molekül bei Normaltemperaturen eine Flüssigkeit ist.

3. Härtbare Zusammensetzung nach Anspruch 1 oder 2, wobei die kontinuierliche Phase ein organisches Lösungsmittel mit einem Siedepunkt von nicht höher als 200˚C enthält.

4. Härtbare Zusammensetzung nach einem der Ansprüche 1 bis 3, wobei die festen Teilchen ein Volumenmittel der Teilchengröße von 0,05 bis 50 μm aufweisen.

## Revendications

1. Composition durcissable qui forme une phase continue et un dispersoïde aux températures normales, c'est-à-dire de -20 à 50˚C, dans laquelle

   > la phase continue est un liquide aux températures normales et comprend (a) un composé comportant deux groupes époxy ou plus dans une molécule, et
   > le dispersoïde comprend (b) un composé présent sous forme de particules solides dans une phase continue aux températures normales et comportant deux groupes amino ou plus dans une molécule, où le composé comportant deux groupes amino ou plus dans une molécule est un composé amine aromatique ayant une structure benzoxazole.

**2.** Composition durcissable selon la revendication 1, dans laquelle le composé comportant deux groupes époxy ou plus dans une molécule est un liquide aux températures normales.

**3.** Composition durcissable selon la revendication 1 ou 2, dans laquelle la phase continue contient un solvant organique ayant un point d'ébullition non supérieur à 200 °C.

**4.** Composition durcissable selon l'une quelconque des revendications 1 à 3, dans laquelle les particules solides ont une taille moyenne de particule en volume de 0,05 à 50 μm.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 54031468 B
- JP 6025470 A
- JP 9031162 A
- JP 8269167 A
- WO 9829467 A
- SU 852914 B
- US 5461090 A